(19) Europäisches Patentamt
European Patent Office
Office européen des brevets

(11) EP 1 092 732 A2

# (12) EUROPÄISCHE PATENTANMELDUNG

(43) Veröffentlichungstag:
**18.04.2001 Patentblatt 2001/16**

(51) Int. Cl.$^7$: **C08F 20/12**

(21) Anmeldenummer: **00122049.0**

(22) Anmeldetag: **11.10.2000**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **14.10.1999 DE 19949667**

(71) Anmelder: **Röhm GmbH**
**64293 Darmstadt (DE)**

(72) Erfinder:
- **Arnold, Manfred, Dr.**
**06667 Leissling (DE)**
- **Hofmann, Sandra, Dr.**
**06108 Halle (DE)**

## (54) Herstellung von Poly(meth)acrylaten durch anionische Polymerisation in Gegenwart spezieller Additive in Toluol bei höheren Temperaturen

(57) Die Erfindung betrifft ein Verfahren zur anionischen Polymerisation von ungesättigten organischen Verbindungen, wie beispielsweise Methacrylsäurederivaten, in Gegenwart eines Initiators und eines Additivs bei Temperaturen zwischen -60 °C und +20 °C.

EP 1 092 732 A2

## Beschreibung

Gebiet der Erfindung

Die Erfindung betrifft ein Verfahren zur lebenden anionischen Polymerisation von (Meth)acrylaten in Toluol bei höheren Temperaturen in Gegenwart chelatisierend wirkender Additive gemäß Formel I.

Unter (Meth)acrylaten werden im Folgenden sowohl die Derivate der Acrylsäure als auch die Derivate der Methacrylsäure verstanden, wie beispielsweise Methacrylsäuremethylester, Methacrylsäureethylester, Methacrylsäurepropylester und die entsprechenden Ester der Acrylsäure.

Formel I

n = 0, 1, 2, 3

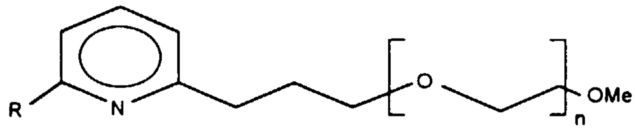

R = -H, $-CH_3$, $C_2H_5$; Propyl, Butyl, tert.-Butyl, iso-Butyl, i-Propyl, Hexyl, Cyclohexyl
Me = Metall

Mit dem Additiv gemäß der Formel I ist es möglich, Methyl(meth)acrylate in Toluol bei höheren Temperaturen, als bisher aus dem Stand der Technik bekannt, mit hohen syndiotaktischen Anteilen anionisch darzustellen.

Stand der Technik

Anionische Polymerisationen sind bekannt. Anionisch polymerisierbar sind Moleküle mit elektronenanziehenden Gruppen, wie beispielsweise Acrylate oder Methacrylate, Aldehyde, Ketone oder Isocyanate. Auch die ringöffnende Polymerisation von beispielsweise Oxiranen oder Thiiranen ist möglich.

Industriell werden unter anderem Butadien und Cyanmethacrylat anionisch polymerisiert. Anionische Polymerisationen sind in der Technik weniger häufig als radikalische Polymerisationen, da sie teure Lösungsmittel und Initiatoren benötigen und Wasser und Sauerstoffspuren in den Reaktionsmedien ausgeschlossen werden müssen.

EP 722 958 (Teyssie et al. vom 1996-07-24) beschreibt ein ähnliches Initiatorsystem und Additivsystem, bei gleichen Reaktionsbedingungen (Toluol, T = 0 °C) erreicht er aber nur eine Polydispersität von D = 2,03 - 3,4. Als chelatisierend wirksames Additiv wurde ein Lithiumethoxylat eingesetzt. Der Anteil an syndiotaktischen Triaden des Polymethacrylats beträgt > 70 %.

Je höher der Anteil der syndiotaktischen Triaden ist, desto höher sind die Wärmeformbeständigkeit und die Glasübergangstemperatur.

Aufgabe

Es bestand daher die Aufgabe, ein weiteres Verfahren zu entwickeln, welches eine deutlich verbesserte Polydispersität des Polymers liefert und welches bei milden Reaktionsbedingungen in apolaren und aprotischen Lösungsmitteln durchführbar ist.

Lösung

Es wurde nun gefunden, daß unter Verwendung von Additiven der Formel I,

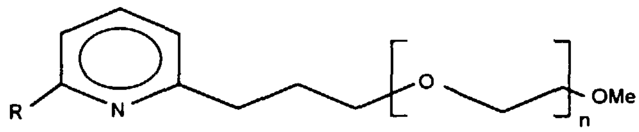

wobei gilt:

R = H oder $CH_3$
n = 0 oder 1
Me = Li

Verbindungen der Formel II

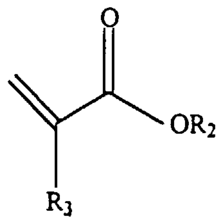

$R_3$ = H, $CH_3$, $-CH_2-CH_3$
$R_2$ = $CH_3$, $-CH_2-CH_3$, -Propyl, Isopropyl, -Butyl, -Pentyl, Hexyl, i-Propyl, i-Butyl, t-Butyl, -2-Ethylhexyl

in einem Lösungsmittel zu Polymeren mit hohen syndiotaktischen Anteilen umgesetzt werden können. Dies ist überraschend, da der positive chelatisierende Effekt einer Stickstoff-Sauerstoff-Kombination in Verbindung mit einem Alkoholat als Additiv nicht vorhergesagt werden konnte.

Als Lösungsmittel kommen alkylsubstituierte Aromaten, wie beispielsweise Toluol in Frage, cyclische Ether wie beispielsweise Tetrahydrofuran (THF) und Toluol/THF-Gemische. Die Reaktionstemperatur beträgt zwischen -60 °C und +20 °C, bevorzugt von -20 °C bis +20 °C und besonders bevorzugt ist der Bereich von 0 °C bis +20 °C.

Die Herstellung des chelatisierend wirkenden Additivs nach Formel I erfolgt gemäß an sich bekannten Methoden durch Reaktion des Alkohols mit Butyllithium oder 1,1-Diphenyl-3-methylpentyllithium in einem inerten organischen Lösungsmittel, wie beispielsweise Cyclohexan.

Durchführung der Reaktion

Das Additiv gemäß Formel I wird in einer Lösung von Methylmethacrylat in Toluol vorgelegt, die Reaktionsdauer beträgt bei 0 °C ca. 10 - 15 Minuten. Die Reaktion wird durch Zugabe von Methanol gequencht , das Polymer durch weitere Zugabe von Methanol ausgefällt.

Die Ergebnisse der Versuche finden sich in Tabelle 1.

Für das verwendete Additiv gemäß Formel I gilt:

n = 1
R = $CH_3$

TABELLE 1

| Beispiel | T [°C] | $M_n$ [kg/mol] | $M_w$ [kg/mol] | D | Umsatz [%] |
|---|---|---|---|---|---|
| Beispiel 1 | 0 | 100.1 | 124.7 | 1.24 | 98 |
| Beispiel 2 | 20 | 152.0 | 316.0 | 1.8 | 89 |

Für die Versuche in Tabelle 2 wurde das Additiv gemäß Formel I verwendet, wobei gilt:

n = 0
R = H
Me = Li

Die Polydispersität ist wesentlich geringer als die im Stand der Technik erzielten Werte (siehe EP 722 958,

Beispiel 1: 2,36
Beispiel 2: 2,2
Beispiel 3: 2,03

T = Reaktionstemperatur
$M_n$ = Zahlenmittel des Molgewichts
$M_w$ = Gewichtsmittel des Molgewichts

$$D = \frac{M_w}{M_n}$$

TABELLE 2

| Nr. | T [°C] | $M_n$ [kg/mol] | $M_w$ [kg/mol] | D | Umsatz [%] |
|---|---|---|---|---|---|
| Beispiel 3 | -20 | 133.4 | 250.6 | 1.9 | 92 |
| Beispiel 4 | 0 | 121.6 | 202.5 | 1.6 | 90 |
| Beispiel 5 | 20 | 109.1 | 185.3 | 1.7 | 73 |

Nach einem analogen Verfahren kann man aus Acrylaten (Formel II, $R_3$ = H, $R_2$ hat die zuvor erwähnten Bedeutungen) unter Verwendung eines Additivs der Formel I ($R_1 = CH_3$, n = 1, Me = Li) durch lebende anionische Polymerisation Blockcopolymere mit Methacrylaten (Verbindungen der Formel II, $R_3 = CH_3$, $R_2$ hat die zuvor erwähnten Bedeutungen) herstellen.

Die eingesetzten Initiatoren werden im Einzelnen im experimentellen Teil beschrieben

BEISPIELE

Durchführung der anionischen Polymerisaion und verwendete Chemikalien

Vorbereitung der Reaktanden und Hilfsmittel:

Die anionischen Polymerisationen wurden in Schlenkgefäßen durchgeführt, die mit einer Ganzglashahnleiste verbunden waren, so daß sowohl Vakuum als auch Inertgasüberdruck gewährleistet werden konnten. Als Inertgas wurde Argon eingesetzt, das in einem Reinigungsturm von letzten Kohlendioxid-, Sauerstoff- und Feuchtigkeitsspuren befreit wurde.

Vor der eigentlichen Polymerisation wurden letzte Feuchtigkeitsspuren in den Reaktoren durch mehrmaliges Ausheizen im Vakuum beseitigt. Die Überführung der verwendeten Lösungsmittel THF und Toluol aus der Ketylierung in die Lösungsmittelgefäße erfolgte mittels Kanülenbrücke. Nachdem die Lösungsmittel mit Styrol und sec.

Butyllithium versetzt wurden (Orangefärbung durch Bildung von Polystyrylanionen) und somit absolute Sauberkeit angezeigt war, erfolgte die Überführung in die jeweiligen Reaktoren durch Kondensation über die Hahnleiste. Zur Einstellung von Lösungsmittelgemischen wurden die erforderlichen kondensierten Lösungsmittelmengen mit Spritzen in ein neues Reaktionsgefäß transferiert.

Die Monomere Methylmethacrylat und 2-Ethylhexylacrylat wurden in einer sorgfältig ausgeheizten Destillationsapparatur mit einer 0,8 molaren Lösung von $Al(iBu)_3$ in Hexan bis zum Auftreten einer beständigen gelblich-grünen Farbe antitriert und anschließend bei möglichst niedriger Temperatur fraktioniert.

Die Additive 2-[3-(6-Methyl-2-pyridyl)-propoxy]ethanolat-Li Salz und 2-Pyridinpropanolat-Li-Salz (PyPOLi) wurden durch Umsetzung von 2-[3-(6-Methyl-2-pyridyl)-propoxyl]ethanol bzw. 2-Pyridinpropanol in Toluol mit sec. Buthyllithium bei 0 °C bis zum Auftreten einer schwachen Rotfärbung titriert und unmittelbar danach eingesetzt.

Herstellung der Initiatoren:

Der monofunktionelle Initiator 1,1-Diphenyl-3-methylpentyllithium wurde direkt im Reaktionsgefäß durch Umsetzung einer toluenischen Lösung von sec. Butyllithium mit der doppelten berechneten Menge an 1,1-Diphenylethylen (DPE) im betreffenden Lösungsmittel dargestellt und bis zur ersten schwachen Rotfärbung antitriert. Anschließend erfolgte die Zugabe der berechneten Menge an sec. Butyllithium. Die Bildung des Initiators war an seiner blutroten Farbe erkennbar.

Zur Darstellung des bifunktionellen Initiators 1,1,4,4-Tetraphenylbutyllithium wurde in einen ausgeheizten Zweihalskolben Lithiumdraht eingepreßt, frisch ketyliertes THF zugegeben und bei 5 °C temperiert.

Im Anschluß wurde die berechnete Menge an DPE zugegeben und für ca. 5 h bei gleicher Temperatur gerührt. Das Anspringen der Reaktion unmittelbar nach der DPE-Zugabe ist an der sofortigen blutroten Färbung der Lösung zu erkennen. Der Initiator wurde immer frisch und gleich in der erforderlichen Konzentration hergestellt, so daß eine weitere Verdünnung nicht erforderlich war.

Beispiel 1

Zu 50 $cm^3$ eines Toluol/THF-Gemisches 3/1 (Vol/Vol) wurden bei -78 °C 1,3 $cm^3$ einer toluenischen Lösung von 0,227 mol/l 2-[3-(6-Methyl-2-pyridyl)-propoxy]ethanolat-Li Salz sowie 0,054 $cm^{-3}$ 1,1-Diphenylethylen gegeben. Anschließend wurde mit einer toluenischen Lösung von 0,089 mol/l sec. Butyllithium antiriert und nach der ersten Rotfärbung 1,7 $cm^3$ des Initiators zudosiert. Zum Schluß erfolgte die Zugabe von 3,4 $cm^3$ 2-Ethylhexylacrylat. Nach 10 min wurde die Reaktion mit Methanol abgebrochen und das Produkt in kaltem Methanol (-60 °C) ausgefällt. Es wurden 2,76 g eines weißen, klebrigen Produktes mit $M_n$ = 169 000 g/mol und D = 1,25 erhalten.

Beispiel 2

50 $cm^3$ eines Toluol/THF-Gemisches 3/1 (Vol/Vol) wurden bei -78 °C mit 0,4 $cm^3$ einer toluenischen Lösung von 0,419 mol/l 2-[3-(6-Methyl-2-pyridyl)-propoxy]ethanolat-Li Salz sowie 0,012 $cm^3$ 1,1-Diphenylethylen versetzt. Anschließend wurde mit einer toluenischen Lösung von 0,0508 mol/l sec. Butyllithium antitriert und nach der ersten Rotfärbung 0,28 $cm^3$ des Initiators zugegeben. Vor der Zugabe von 1,13 $cm^3$ 2-Ethyl-hexylacrylat wurde bis zur Entfärbung mit wenigen Tropfen MMA antitriert. Es wurden 0,97 g eines weißen, klebrigen Produktes mit $M_n$ = 72 400 g/mol und D = 1,03 erhalten.

Beispiel 3

Zu 150 $cm^3$ eines Toluol/THF-Gemisches 3/1 (Vol/Vol) wurden bei -78 °C 0,6 $cm^3$ einer toluenischen Lösung von 0,442 mol/l 2-[3-(6-Methyi-2-pyridyl)-propoxy]ethanolat-Li Salz sowie 0,0144 $cm^3$ 1,1-Diphenylethylen gegeben. Anschließend wurde mit einer toluenischen Lösung von 0,048 mol/l sec. Butyllithium antitriert und nach der ersten Rotfärbung 0,55 $cm^3$ des Initiators zugegeben. Dann wurden 3,82 $cm^3$ Methylmethacrylat und nach ca. 10 min 0,45 $cm^3$ 2-EHA zugegeben. Nach 10 min wurde die Reaktion mit Methanol abgebrochen und das Produkt in kaltem Methanol (-60 °C) ausgefällt. Es wurden 3,8 g eines weißen, spröden Feststoffes mit $M_n$ = 155 7000 g/mol und D = 1,05 erhalten.

Beispiel 4

Zu 150 $cm^3$ eines Toluol/THF-Gemisches 3/1 (Vol/Vol) wurden bei -78 °C 0,83 $cm^3$ einer toluenischen Lösung von 0,48 mol/l l 2-[3-(6-Methyl-2-pyridyl)-propoxy]ethanolat-Li Salz dosiert. Anschließend wurden 0,74 $cm^3$ einer Lösung von 0,0536 mol/l 1,1,4,4,-Tetraphenylbutyllithium zugegeben. Danach wurden 4,75 $cm^{-3}$ 2-EHA und dann sofort 1,9 $cm^3$ Methylmethacrylat eingespritzt. Nach 10 min wurde die Reaktion mit Methanol abgebrochen und das

Produkt in kaltem Methanol (-60 °C) ausgefällt. Es wurden 5,7 g eines weißen, klebrigen Produktes mit $M_n$ = 196 600 g/mol und D = 1,16 erhalten.

Beispiel 5

150 $cm^3$ Toluol wurden bei 0 °C mit 2,85 $cm^3$ einer toluenischen Lösung von 0,438 mol/l 2-[3-(6-Methyl-2-pyridyl)-propoxy]ethanolat-Li Salz, 0,09 $cm^3$ DPE und 1,09 $cm^3$ einer toluenischen Lösung von 0,23 mol/l sek. Buthyllithium versetzt. Das Gemisch wurde 30 min bei 0 °C gerührt und anschließend 5,3 $cm^3$ Methylmethacrylat eingespritzt. Der Reaktionsabbruch erfolgte mit Methanol, das Produkt wurde in kaltem Methanol ausgefällt. Es wurden 4,9 g eines weißen, spröden Feststoffes mit $M_n$ = 100 100 g/mol und D = 1,24 erhalten. Der Anteil an syndiotaktischen Triaden lag bei rr = 68 % (bestimmt mittels $^{13}C$-NMR-Spektroskopie).

Beispiel 6

100 $cm^3$ Toluol wurden bei 0 °C mit 1,45 $cm^3$ einer toluenischen Lösung von 0,344 mol/l 2-[3-(6-Methyl-2-pyridyl)-propoxy]ethanolat-Li Salz, 0,018 $cm^3$ DPE und 1 $cm^3$ einer toluenischen Lösung von 0,1 mol/l sek. Butyllithium versetzt. Das Gemisch wurde 30 min bei 0 °C gerührt und anschließend 2,23 $cm^3$ Butylmethacrylat eingespritzt. Der Reaktionsabbruch erfolgte mit Methanol, das Produkt wurde in kaltem Methanol ausgefällt. Es wurden 1,9 g eines weißen, spröden Feststoffes mit $M_n$ = 139 700 g/mol und D = 1,19 erhalten. Der Anteil an syndiotaktischen Triaden lag bei rr = 67,8 %.

Beispiel 7

100 $cm^3$ Toluol wurden bei 0 °C mit 3,75 $cm^3$ einer toluenischen Lösung von 0,2 mol/l 2-[3-(6-Methyl-2-pyridyl)-propoxy]ethanolat-Li Salz, 0,054 $cm^3$ DPE und 1,7 $cm^3$ einer toluenischen Lösung von 0,088 mol/l sek. Butyllithium versetzt. Das Gemisch wurde 30 min bei 0 °C gerührt und anschließend 3,18 $cm^3$ Methylmethacrylat eingespritzt. Der Reaktionsabbruch erfolgte mit Methanol, das Produkt wurde in kaltem Methanol ausgefällt. Es wurden 2,68 g eines weißen, spröden Feststoffes mit $M_n$ = 121 600 g/mol und D = 1,7 erhalten. Der Anteil an syndiotaktischen Triaden lag bei rr = 68 %.

**Patentansprüche**

**1.** Verfahren zur Herstellung von Polymeren mit geringer Polydispersität durch anionische Polymerisation mit einem Initiator und einem Additiv,
dadurch gekennzeichnet,
daß ein ungesättigtes Carbonsäurederivat in einem Lösungsmittel in Gegenwart eines Additivs der Formel I bei niedriger Temperatur in Gegenwart eines Initiators polymerisiert wird.

Formel I

n = 0, 1, 2, 3

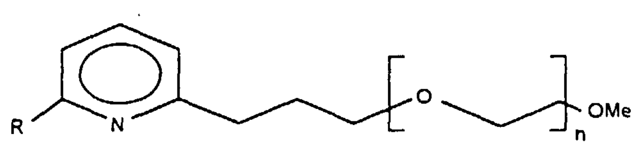

R = -H, $-CH_3$, $C_2H_5$; Propyl, Butyl, tert.-Butyl, iso-Butyl, i-Propyl, Hexyl, Cyclohexyl
Me = Li

**2.** Verfahren nach Anspruch 1,
dadurch gekennzeichnet,
daß als ungesättigtes Carbonsäurederivat Methylmethacrylat und/oder andere Methacrylate verwendet werden.

**3.** Verfahren nach Anspruch 1,

dadurch gekennzeichnet,
daß als ungesättigtes Carbonsäurederivat Ethylacrylate verwendet werden.

**4.** Verfahren nach Anspruch 1,
dadurch gekennzeichnet,
daß als ungesättigtes Carbonsäurederivat 2-Ethylhexylacrylate verwendet werden.

**5.** Verfahren nach Anspruch 1,
dadurch gekennzeichnet,
daß das Verfahren bei einer Temperatur von -60 °C bis + 20 °C durchgeführt wird.

**6.** Verfahren nach Anspruch 1,
dadurch gekennzeichnet,
daß das Verfahren bei einer Temperatur von 0 °C bis +20 °C durchgeführt wird.

**7.** Polymer, erhältlich nach einem der Verfahren der Ansprüche 1 bis 6.